# EUROPEAN PATENT APPLICATION

(11) **EP 4 692 185 A1**
(43) Date of publication of application: **11.02.2026**
(21) Application number: 24780506.2
(22) Date of filing: 27.03.2024
(51) Int. Cl.: C08J 5/18, C08J 7/00

(54) **CELLULOSE ACYLATE FILM**

(30) Priority: 29.03.2023 JP 2023053184
(71) Applicant: FUJIFILM Corporation, Tokyo 106-8620 (JP)
(72) Inventor: KATANO, Shogo, ashigara-shi, Kanagawa 250-0193 (JP); IKEYAMA, Akihiro, ashigara-shi, Kanagawa 250-0193 (JP)
(74) Representative: Hoffmann Eitle
(86) International application number: PCT/JP2024/012360
(87) International publication number: WO 2024/204404

(57) **Abstract**

Provided is a cellulose acylate film that prevents condensation and cloudiness, and suppresses a decrease in transparency. A cellulose acylate film (10) is provided with a base layer (12) and a surface layer (14). The surface layer (14) is formed by saponification of the surface of a base film (20). The cellulose acylate film (10) includes cellulose acylate and a polyester. The cellulose acylate has an acyl group substitution degree in a range of 2.50 or more and 3.00 or less. The polyester is represented by a specific formula and has a weight-average molecular weight in a range of 50,000 or more and 1,000,000 or less.

## Description

### BACKGROUND OF THE INVENTION

### 1. Field of the Invention

The present invention relates to a cellulose acylate film.

### 2. Description of Related Art

A cellulose acylate film typified by a cellulose acetate film has high transparency and moisture permeability, and is therefore used as agricultural materials such as an agricultural greenhouse as well as optical applications such as a film for a polarizing plate (see WO2016/103898A).

### SUMMARY OF THE INVENTION

However, in WO2016/103898A, there was a problem in that the adhesion of fine water droplets to the surface of the cellulose acylate film causes condensation and cloudiness, and thus, the transparency is decreased.

The present invention has been made in view of the background, and an object of the present invention is to provide a cellulose acylate film which prevents condensation and cloudiness, and suppresses a decrease in transparency.

In order to solve the problems, the cellulose acylate film of an embodiment of the present invention includes a base layer including cellulose acylate and a polyester, and a surface layer provided on the base layer, in which the surface layer is a saponified layer formed by saponifying the surface of a film-like substrate including the cellulose acylate and the polyester, the base layer is an unsaponified layer which is not saponified in the substrate, the cellulose acylate has an acyl group substitution degree in a range of 2.50 or more and 3.00 or less, and the polyester has a weight-average molecular weight in a range of 50,000 or more and 1,000,000 or less, and includes at least one of a compound represented by General Formula (1) or a compound represented by General Formula (2). 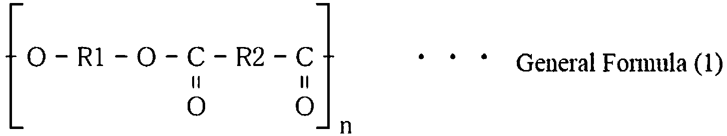 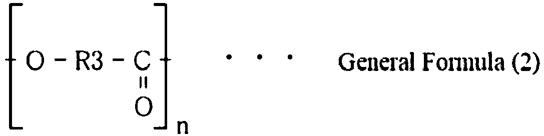 In General Formula (1), R1 and R2 are common or different alkyl groups, and n is an integer of 1 or more, and in General Formula (2), R3 is an alkyl group and n is an integer of 1 or more.

In General Formula (1), it is preferable that R1 is a residue derived from a diol having 2 to 6 carbon atoms, and R2 is a residue derived from a dicarboxylic acid having an aliphatic group having 2 to 6 carbon atoms.

In General Formula (1), it is preferable that R1 and/or R2 each represent two or more kinds.

In General Formula (2), it is preferable that R3 has 2 to 6 carbon atoms.

It is preferable that the surface layer has a thickness in a range of 0.20 µm or more and 10.00 µm or less.

It is preferable that a ratio of the polyester to the cellulose acylate is in a range of 20 parts by mass or more and 120 parts by mass or less.

It is preferable that the cellulose acylate is cellulose acetate.

It is preferable that the haze degree is 5% or less.

It is preferable that the equilibrium moisture content is 1.5% or less.

According to the present invention, it is possible to provide a cellulose acylate film which prevents condensation and cloudiness, and suppresses a decrease in transparency.

### BRIEF DESCRIPTION OF THE DRAWINGS

FIG. 1 is an explanatory view showing a process for producing a cellulose acylate film.
FIG. 2 is an explanatory view showing an example of a usage form of a cellulose acylate film.
FIG. 3 is an explanatory view showing an example of a usage form of a cellulose acylate film.

### DESCRIPTION OF THE PREFERRED EMBODIMENTS

### <Cellulose Acylate Film And Method for Producing Same>

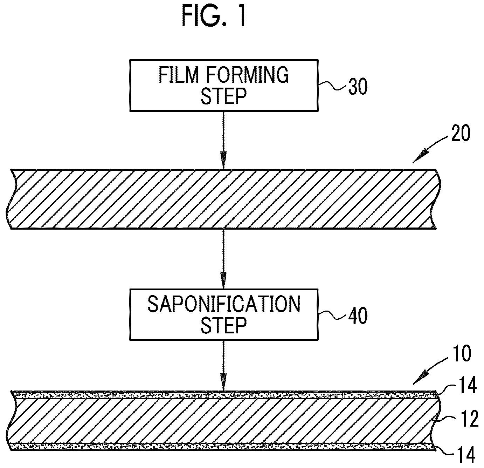

In FIG. 1, a cellulose acylate film 10 includes a base layer 12 and a surface layer 14 provided on the surface of the base layer 12 (on both of the front surface and the back surface in the present embodiment). The cellulose acylate film 10 is produced through a film forming step 30 of forming a substrate film 20 (substrate) and a saponification step 40 of saponifying the surface of the substrate film 20.

In the film forming step 30, first, cellulose acylate and an additive such as polyester are dissolved in a solvent to generate a dope. Examples of the solvent include methylene chloride and alcohols.

Next, the dope is cast onto a support to form a cast film. A drum or a band is used as the support, and the dope is cast onto the circumferential surface of a rotating drum or the surface of a traveling band to form a cast film. At least the circumferential surface of the drum or at least the surface of the band is preferably made of a metal, and the drum or band preferably has a temperature control mechanism for adjusting the temperature of the circumferential surface or the surface to a preset constant temperature. In a case where the support is a drum, the temperature control mechanism can adjust the temperature of the circumferential surface of the drum. In a case where the support is a band, the temperature of the surface of the band can be indirectly adjusted by adjusting a temperature of a circumferential surface of a roller on which the support is allowed to travel.

Furthermore, solution film formation methods are roughly classified into a drying gelation method and a cooling gelation method depending on how a cast film is solidified. In the drying gelation method, a cast film is dried to a desired dryness level, and the cast film is thus gelled and solidified by this drying. That is, the cast film is dried and solidified to such an extent that the wet film after peeling can be transported. The drying is usually performed by blowing drying air onto the cast film. In order to solidify the cast film by drying, it takes a longer time than the time required for solidification by the cooling gelation method, and thus, a band is usually used as the support instead of a drum.

On the other hand, the cooling gelation method is a method in which a cast film is actively cooled into a gel form in a state where the proportion of the residual volatile matter content which is a residual solvent is extremely high, and the gelation is progressed until the cast film is solidified to such an extent that it can be transported even after being peeled off. This method can solidify the cast film in a shorter time than the drying gelation method, and thus, a drum can be used as the support.

Either one of the drying gelation method or the cooling gelation method, or a combination of a method in which the drying gelation method and the cooling gelation method can be used to solidify the cast film. Therefore, any of the methods may be adopted.

However, the present inventors have found that the viscosity of the dope to which the polyester has been added as described above particularly increases at a low temperature. It has also been found that the increase in the viscosity of the dope at a low temperature, specifically, the increase in a storage elastic modulus of the dope is due to an interaction between the cellulose acylate and the polyester, and the viscosity of the dope can be appropriately adjusted depending on the concentration or temperature of the dope, which is particularly effective in a case where the temperature of the dope is 0°C or lower. Therefore, it is preferable to adopt the cooling gelation method for solidifying the cast film.

In addition, according to the above-described combination of the dope and the cooling gel method, even a thick cast film is quickly and easily gelled, and therefore, a relatively thick substrate film 20 (cellulose acylate film 10) can be produced. By performing the cooling gelation method using a support which is a drum, the cast film can be quickly peeled off and dried from both sides of the film, and therefore, a thick film can be efficiently produced.

After the generation of a dope, the formation of a cast film, and the solidification of the cast film, the cast film is solidified to such an extent that it can be peeled off and transported, and is then continuously peeled off from the support using a peeling roller or the like. Then, the peeled cast film is dried. As a result, the substrate film 20 is formed.

The substrate film 20 formed in the film forming step 30 is transported to the saponification step 40. In the saponification step 40, the surface of the substrate film 20 is saponified by an application method using application or an immersion method using immersion. In the saponification by the application method, for example, an alkali solution as a saponification liquid is applied onto the surface of the substrate film 20 (both of the front surface and the back surface in the present embodiment), and the substrate film 20 onto which the alkali solution has been applied is heated and washed. The saponification liquid contains isopropyl alcohol.

In the saponification by the immersion method, for example, the substrate film 20 is immersed in an aqueous alkali solution as the saponification liquid, and then washed. As the aqueous alkali solution, for example, an aqueous sodium hydroxide (NaOH) solution or an aqueous potassium hydroxide (KOH) solution is used. The saponification liquid contains propylene glycol monomethyl ether. Subsequently, the base film 20 is neutralized with an acid or an aqueous acid solution as a neutralizing liquid, and then washed again and dried. Furthermore, in the present embodiment, both surfaces of the substrate film 20 are saponified, but a protective film may be laminated on the back surface of the substrate film 20 such that only the front surface is saponified, and the back surface of the substrate film 20 may be prevented from the saponification.

By saponifying the surface of the base film 20 (both of the front surface and the back surface in the present embodiment) in the saponification step 40, the saponified portion serves as above-described surface layer 14, the unsaponified portion serves as the above-described base layer 12, and the cellulose acylate film 10 having the surface layer 14 and the base layer 12 is thus produced. As described above, the surface layer 14 of the cellulose acylate film 10 is a saponified layer formed by saponifying the surface of the base film 20. In addition, the base layer 12 of the cellulose acylate film 10 is an unsaponified layer which is not saponified in the base film 20.

Furthermore, in the present embodiment, an example is described, in which the cellulose acylate film 10 provided with the surface layer 14 on both surfaces of the base layer 12 is produced by saponifying both surfaces of the base film 20, but the cellulose acylate film provided with the surface layer 14 on one surface of the base layer 12 may be produced by saponifying one surface of the base film 20. As described above, the cellulose acylate film including the surface layer 14 on one surface of the base layer 12 is also included in the cellulose acylate film of the embodiment of the present invention. In a case where the surface layer 14 is provided on both surfaces of the cellulose acylate film 10 of the embodiment of the present invention, there is no turbidity and the transparency of the film is high even in a case where the film is used in a high-temperature and high-humidity environment. In a case where the surface layer 14 is provided on one surface, an effect of suppressing the turbidity or condensation of the surface used as the agricultural material can be obtained, and it is easy to impart another functional layer to the surface not having the surface layer 14.

### <Cellulose Acylate Film>

The thickness of the cellulose acylate film 10 is not particularly limited, but is preferably in a range of 10 µm or more and 500 µm or less, more preferably in a range of 15 µm or more and 300 µm or less, and still more preferably in a range of 20 µm or more and 200 µm or less. In addition, although the thickness varies depending on uses, for example, in a case where the film is used as an agricultural material, the thickness is preferably in a range of 80 µm to 300 µm.

In addition, the equilibrium moisture content of the cellulose acylate film 10 is preferably in a range of 1.5% or less. The equilibrium moisture content is a moisture content in a state where the moisture content in the material reaches equilibrium in the atmosphere, and in the present embodiment, the equilibrium moisture content in an environment of 25°C and a relative humidity of 50% is set to 1.5% or less. The equilibrium moisture content can be determined by conditioning a sample of the cellulose acylate film 10 in an environment of 25°C and a relative humidity of 50% for 24 hours or longer, measuring the sample using a Karl Fischer moisture meter (for example, AQ-2200, manufactured by Hayashi Manufacturing, Inc.), and dividing the mass of the moisture in the measured sample by the mass of the sample. By setting the equilibrium moisture content to be within the range, the permeability of carbon dioxide can be decreased, making the material suitable as an agricultural material. That is, by covering an agricultural product with the cellulose acylate film 10, it is possible to suppress the outflow of carbon dioxide required for the growth of agricultural products from the growth space for the agricultural products. In addition, in a case of providing the surface layer 14 (saponified layer), the water content tends to increase, but in the cellulose acylate film 10 of the embodiment of the present invention, the permeability of carbon dioxide can be decreased by setting the saponified layer to a certain thickness and setting the equilibrium moisture content to be in the range, and therefore, the cellulose acylate film 10 is suitably used as an agricultural material. Moreover, by setting the equilibrium moisture content to be in the range, the film stretching due to high humidity or condensation is suppressed during use as an agricultural material, and thus, sagging or the like in a case of being extended as an agricultural material is less likely to occur. The equilibrium moisture content is more preferably 0.1% or more and 1.0% or less, and still more preferably 0.2% or more and 0.9% or less.

In addition, the cellulose acylate film 10 preferably has a moisture permeability of 100 g/m2·day (24 h) or more at a temperature of 40°C and a relative humidity of 90% (the relative humidity is hereinafter referred to as RH). The moisture permeability refers to a moisture permeability determined in accordance with Japanese Industrial Standards JIS Z0208: 1976, Condition B (temperature of 40°C, 90% RH). Since the present cellulose acylate film 10 is formed of cellulose acylate and a polyester, it has high moisture permeability, and the moisture permeability is generally in a range of 300 g/m2·day or more and 1,200 g/m2·day or less. In addition to the above-described equilibrium moisture content, this high moisture permeability provides a humidity control effect while suppressing the outflow of carbon dioxide due to the cellulose acylate film 10, and the cellulose acylate film 10 has high anti-cloudiness properties and suppresses condensation and dripping of condensed moisture. Therefore, for example, in a case where a growth space for agricultural products is formed by the cellulose acylate film 10, the condensation on the surface of the cellulose acylate film 10 is prevented in a case of excessive moisture being generated inside the growth space, thereby providing anti-drip properties and suppressing mist formation inside a greenhouse, for example. The moisture permeability is preferably in a range of 200 g/m2·day or more and 1,000 g/m2·day or less, and more preferably in a range of 300 g/m2·day or more and 700 g/m2·day or less.

Furthermore, the haze degree of the cellulose acylate film 10 is preferably within a range of 5% or less. The haze degree indicates a diffusion degree of transmitted light, and can be measured using, for example, a haze meter (NDH5000, manufactured by Nippon Denshoku Industries Co., Ltd.). By suppressing the haze degree to be small in this manner, the transparency is high, and for example, in a case where the film is used as an agricultural material, the loss of light from a light source such as sunlight can be suppressed. The haze degree is preferably 5% or less in a state where the film is in a dry state (for example, a state where the film is left for 2 hours or longer in an environment of 25°C and a relative humidity of 50%) and a state where the film is used as an agricultural material (for example, a state where the film is used in a high-temperature and high-humidity environment of 60°C and a relative humidity of 90%). In the cellulose acylate film 10 of the embodiment of the present invention, the surface layer 14 formed by saponification provide high transparency not only in a state of a dry film but also in a state of a film being used in a high-temperature and high-humidity environment. The haze degree is more preferably 4% or less, and particularly preferably 3% or less.

In addition, in the cellulose acylate film 10, the surface layer 14 preferably has a thickness in a range of 0.20 µm or more and 10.00 µm or less. In a case where the thickness of the surface layer is 0.20 µm or more, the formation of a water film is good, and the haze degree is suppressed to be low without turbidity in a high-temperature and high-humidity environment. In a case where the thickness of the surface layer is 10.00 µm or less, the equilibrium moisture content is appropriately suppressed. The thickness of the surface layer is more preferably 0.40 µm or more and 8.00 µm or less, and still more preferably 0.50 µm or more and 6.00 µm or less.

The thickness of the surface layer 14 can be determined by an ATR method of FT-IR or a method in which the cellulose acylate film 10 is dissolved in methylene chloride and/or chloroform. Furthermore, the thickness of the surface layer 14 is determined by the following method in the present embodiment. A sample sampled from the cellulose acylate film 10 is immersed in dichloromethane for 24 hours. A sample remaining not dissolved by this immersion is dried and the thickness of the dried sample is measured three times. An average of the three measured values is defined as a thickness of the surface layer 14.

The water absorbency of the surface layer 14 can be reliably increased by forming the surface layer 14 as a layer including cellulose. In a case where the surface layer 14 is detected as a layer by the above-described dichloromethane immersion method, it can be seen that the surface layer 14 is formed as a layer including cellulose. In addition, in a case where only the surface is in a cellulose state due to saponification, it is presumed that the saponified portion is not observed as a layer as immersed in dichloromethane, and the cellulose moiety and the cellulose acylate moiety are in a mixed state.

In the ATR method of FT-IR, the measurement can be performed as follows. In a case where an acyl group amount of the surface of the cellulose acylate film 10 on the surface layer 14 side is defined as X and an acyl group amount of the cellulose acylate film 10 on the surface layer 12 side is defined as Y, an acyl group proportion determined by X/Y is 0.7 or less, and in the present embodiment, for example, 0.3. As the acyl group proportion is smaller, the surface on the surface layer 14 side has fewer acyl groups with respect to the surface on the base layer 12 side, which means that more acyl groups are saponified into hydrophilic groups in the saponification treatment of the cellulose acylate film. The thickness of the saponified layer can be determined by a method in which the measurement by the ATR method of FT-IR is compared with the thickness of the saponified layer obtained by immersion in dichloromethane.

The acyl group amount X and the acyl group amount Y are determined as spectral intensities of acyl groups determined by an attenuated total reflection (ATR) method (hereinafter referred to as an ATR method) of Fourier transform infrared spectroscopy (hereinafter referred to as FT-IR). Specifically, the spectrum intensity of a signal of the acyl group of the cellulose acylate is corrected (normalized) with the spectrum intensity of the common signal of the cellulose-based polymer. For example, in a case where TAC described later is used as the cellulose, the acyl group is an acetyl group and the signal of the acetyl group is 1,210 cm⁻¹. The common signal of the cellulose-based polymer is preferably 1,030 cm⁻¹. Then, the spectral intensities of the signals of the acyl groups of the cellulose acylate obtained by the correction are determined as the acyl group amount X and the acyl group amount Y. As described above, the acyl group amount X and the acyl group amount Y are indicators that are replaced with the number of acyl groups.

As is well known, the ATR method of FT-IR is a method for determining a spectral intensity by allowing light to penetrate a measurement sample, and the obtained spectral intensity is not a surface of the measurement sample in a strict sense. In a case where a diamond prism is used and the measurement angle is set to 45 degrees, which is one method of general ATR methods of FT-IR, the depth of penetration of light from the surface of the measurement sample is about 2 to 3 µm. Since the surface layer 14 of the present embodiment is extremely thin as described later, the reliability of the amount of the acyl group determined for the surface layer 14 decreases as the depth of the light penetration increases to more than 2 µm. Therefore, it is preferable that the spectral intensity within a range of 2 µm in depth from the surface on the surface layer 14 side is determined as the acyl group amount X, and in the present embodiment, the depth of light penetration is also set to 2 µm, and the spectral intensity in a range of 2 µm or less from the surface on the surface layer 14 side is determined as the acyl group amount X.

Similarly, the spectral intensity within a range of 2 µm in depth from the surface on the base layer 12 side is preferably determined as the acyl group amount Y, and in the present embodiment, the acyl group amount Y is also determined in this manner. Furthermore, in a case where the surface layer 14 is also provided on the surface of the base layer 12 side, it is preferable that the acyl group amount of the base film 20 is determined and the acyl group amount is used as the acyl group amount Y. In a case where it is difficult to determine the acyl group amount by this method, the acyl group amount may be determined by another method such as dissolving the cellulose acylate film 10 in methylene chloride and/or chloroform, forming a film from this solution, and obtaining the acyl group amount in the film surface of this film by IR.

### <Cellulose Acylate>

Since the cellulose acylate included in the cellulose acylate film 10 (base film 20) is obtained by esterifying a hydroxy group of cellulose with a carboxylic acid, it has an acyl group. The acyl group substitution degree of the cellulose acylate included in the cellulose acylate film 10 is in a range of 2.50 or more and 3.00 or less, preferably in a range of 2.60 or more and 2.97 or less, and more preferably in a range of 2.70 or more and 2.95 or less.

As the acyl group substitution degree is lower, the water absorbency of the cellulose acylate film 10 is higher, deformation or sagging occurs due to the stretching caused by water absorption, and the strength decreases. Therefore, the acyl group substitution degree of the cellulose acylate constituting the cellulose acylate film 10 is set to 2.50 or more. In addition, since the theoretical upper limit of the acyl group substitution degree is 3.00, the acyl group substitution degree is set to 3.00 or less.

In this manner, by setting the acyl group substitution degree within a relatively high range, the water absorbency of the cellulose acylate film 10 can be suppressed and the equilibrium moisture content can be set to be within an appropriate range, and a film having high moisture permeability can be obtained by suppressing the permeability of carbon dioxide. In addition, a film having no decrease in stretching or strength due to the water content can be obtained. On the other hand, in a case where the acyl group substitution degree is increased, the biodegradability is decreased, but in the present embodiment, a biodegradable polyester is added to form the cellulose acylate film 10 (base film 20), thereby ensuring the biodegradability.

The acyl group of the cellulose acylate included in the cellulose acylate film 10 is not particularly limited, and may be an acetyl group having one carbon atom or may be an acyl group having 2 or more carbon atoms. The acyl group having 2 or more carbon atoms may be an aliphatic group or an aryl group, and examples thereof include an alkylcarbonyl ester of cellulose, an alkenylcarbonyl ester of cellulose, an aromatic carbonyl ester of cellulose, and an aromatic alkylcarbonyl ester of cellulose, each of which may further have a substituent. Examples of the substituent include a propionyl group, a butanoyl group, a pentanoyl group, a hexanoyl group, an octanoyl group, a decanoyl group, a dodecanoyl group, a tridecanoyl group, a tetradecanoyl group, a hexadecanoyl group, an octadecanoyl group, an iso-butanoyl group, a t-butanoyl group, a cyclohexanecarbonyl group, an oleoyl group, a benzoyl group, a naphthylcarbonyl group, and a cinnamoyl group. As the acyl group having 2 or more carbon atoms, the propionyl group or the butanoyl group is preferable.

The acyl group of the cellulose acylate included in the cellulose acylate film 10 may be of only one kind or of two or more kinds, but it is preferable that at least one kind thereof is an acetyl group. In a case of being cellulose acylate having an acetyl group, the cellulose acylate film 10 easily absorbs moisture, and therefore, an effect of suppressing condensation is further improved. In addition, it is also preferable that the compound has the propionyl group or the butanoyl group in addition to the acetyl group. This is because the equilibrium moisture content of the cellulose acylate film 10 can be appropriately suppressed. The cellulose acylate in which all acyl groups are acetyl groups is particularly preferable, and specific examples thereof include cellulose acetate (triacetylcellulose (TAC)). In addition, the cellulose acetate including the propionyl group in addition to the acetyl group, that is, cellulose acetate propionate (CAP) is also preferable.

The acyl group substitution degree can be determined by a conventional method. For example, an acetylation degree (acetyl group substitution degree) is determined through measurement and calculation of an acetylation degree according to ASTM: D-817-91 (method for testing cellulose acetate and the like) which is a standard of ASTM International (former name: American Society for Testing and Materials). In addition, it can also be measured by a distribution measurement of an acylation degree (acyl group substitution degree) by high performance liquid chromatography. As an example of this method, the measurement of an acetylation degree of cellulose acetate is performed in such a manner that a sample is dissolved in methylene chloride, and using a column Nova-Pak (registered trademark) phenyl (manufactured by Waters Corporation), a distribution of an acetylation degree is measured by a linear gradient from a mixed liquid of methanol and water (with a mass ratio of methanol:water of 8:1) as an eluent to a mixed liquid of dichloromethane and methanol (with a mass ratio of dichloromethane:methanol of 9:1) as an eluent, and the measured value is compared with a calibration curve obtained from a standard sample having a different acetylation degree for the determination. These measuring methods can be determined with reference to the methods described in JP2003-201301A. In a case where the cellulose acylate is taken from the cellulose acylate film 10, it is preferable to measure an acetylation degree thereof by high performance liquid chromatography since additives are included in the film.

### <Additive (Polyester)>

As described above, the cellulose acylate film 10 is formed by adding polyester as an additive in a case of forming the base film 20. That is, the cellulose acylate film 10 (base film 20) includes polyester in addition to cellulose acylate.

The polyester has a weight-average molecular weight Mw in a range of 50,000 or more and 1,000,000 or less, preferably in a range of 60,000 or more and 500,000 or less, and more preferably in a range of 90,000 or more and 200,000 or less. In a case where the weight-average molecular weight Mw is 50,000 or more, the equilibrium moisture content of the cellulose acylate film 10 is appropriately suppressed, the folding endurance of the film is improved, and the effects of reducing the residual solvent, reducing the elution amount, and the like can be preferably exhibited. In a case where the weight-average molecular weight Mw is 1,000,000 or less, the transparency of the cellulose acylate film 10 is good, the haze degree is low, the polyester is easily dissolved in a solvent, and in a case of being dissolved, it enables an appropriate viscosity property as a dope to be obtained.

The polyester preferably has a dispersity represented by Mw/Mn, which is a ratio of the weight-average molecular weight Mw to the number-average molecular weight Mn, in a range of 3 or more and 30 or less. The dispersity is more preferably in a range of 4 or more and 25 or less, and still more preferably in a range of 5 or more and 20 or less. In a case where the dispersity is within this range, the molecular weight distribution is broad, and thus, in a case where the polyester is added to cellulose acylate, the transparency is good, the haze degree is low, and the folding endurance of the cellulose acylate film can be improved.

The polyester is preferably a biodegradable polyester. In addition, the content of the polyester is preferably in a range of 20 part by mass or more and 120 parts by mass or less with respect to 100 parts by mass of the cellulose acylate. As the content of the polyester increases, an effect of improving the folding endurance is obtained, and an effect of suppressing the equilibrium moisture content of the film is obtained. On the other hand, in a case where the content of the polyester exceeds the range, the haze degree increases. Therefore, the content of the polyester included in the cellulose acylate film is set to be within the range. The content of the polyester is preferably 25 parts by mass or more, more preferably 40 parts by mass or more, still more preferably 60 parts by mass or more, and particularly preferably 70 parts by mass or more. In addition, the content is more preferably 110 parts by mass or less, and particularly preferably 100 parts by mass or less.

Examples of the polyester include polybutylene succinate (PBS) and polybutylene succinate adipate (PBAS), and in the present embodiment, a polyester including at least one of a compound represented by General Formula (1) or a compound represented by General Formula (2) is used.

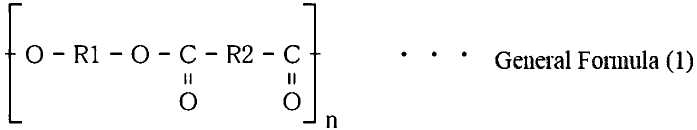

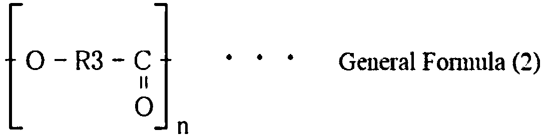

In General Formula (1), R1 and R2 are both alkyl groups, and may be the same as or different from each other. In addition, n is an integer of 1 or more.

In General Formula (1), R1 is preferably a residue derived from a diol having 2 to 6 carbon atoms, and more preferably a residue derived from a diol having 4 to 6 carbon atoms. In addition, in General Formula (1), R2 is preferably a residue derived from a dicarboxylic acid having an aliphatic group having 2 to 6 carbon atoms. Furthermore, in General Formula (1), it is more preferable that R1 and/or R2 each represent two or more kinds, that is, the polyester to be added to the cellulose acylate is a copolymer. This makes it possible to prevent a dope described later from being turbid, to obtain a film having high transparency and a low haze, to appropriately increase the viscosity of the dope at a low temperature, to appropriately increase the content of the polyester in the dope, to appropriately suppress the equilibrium moisture content, and to improve the folding endurance.

Furthermore, it is preferable that a residue of butanediol is used as R1, and one kind of residue of succinic acid or two kinds of residues of succinic acid and adipic acid are used as R2. This is PBSA. Therefore, in General Formula (1), at least one of R1 or R2 is preferably a residue obtained by copolymerizing two or more kinds of aliphatic moieties which are different from each other.

The diol having 2 to 6 carbon atoms, which serves as the source of R1, is not particularly limited, and examples thereof include ethanediol, 1,2-propanediol, 1,3-propanediol, 1,2-butanediol, 1,3-butanediol, 2-methyl-1,3-propanediol, 1,4-butanediol, 1,5-pentanediol, 2,2-dimethyl-1,3-propanediol (neopentyl glycol), 1,6-hexanediol, and 1,2-hexanediol, among which the 1,4-butanediol is preferable. Furthermore, in a case where R1 represents two or more kinds, the diol having 2 to 6 carbon atoms, which serves as the source of R1, is preferably the 1,4-butanediol or the ethanediol.

In addition, the dicarboxylic acid having an aliphatic group having 2 to 6 carbon atoms, which serves as the source of R2, is not particularly limited, and examples thereof include succinic acid, glutaric acid, adipic acid, suberic acid, cyclohexanedicarboxylic acid, maleic acid, and fumaric acid, among which the succinic acid or the adipic acid is preferable. Furthermore, in a case where R2 represents two or more kinds, the dicarboxylic acid having an aliphatic group having 2 to 6 carbon atoms, which serves as the source of R2, is preferably the succinic acid or the adipic acid.

In General Formula (2), R3 represents an alkyl group and n represents an integer of 1 or more. In General Formula (2), R3 preferably has 2 to 6 carbon atoms. R3 is generally an aliphatic hydroxycarboxylic acid, and specific examples thereof include glycolic acid, 3-hydroxybutyric acid, 4-hydroxybutyric acid, 3-hydroxyvaleric acid, 4-hydroxyvaleric acid, and 6-hydroxycaproic acid, and further include cyclic esters of aliphatic hydroxycarboxylic acids, for example, glycolide which is a dimer of glycolic acid, and ε-caprolactone which is a cyclic ester of 6-hydroxycaproic acid. These can be used alone or in combination of two or more kinds thereof.

Specific examples of the polyester to be added to the cellulose acylate film 10 will be described with reference to Table 1.

**[Table 1]**

| | Molecular weight Mn | Molecular weight Mw | Dispersity Mn/Mw | R1 | R2 | | | | R3 |
|---|---|---|---|---|---|---|---|---|---|
| | | | | Component | First component | Proportion | Second component | Proportion | Component |
| Additive A | 8,420 | 101,000 | 12.0 | C₄H₈ | C₂H₄ | 100% | - | - | - |
| Additive B | 9,510 | 139,000 | 14.6 | C₄H₈ | C₂H₄ | 100% | - | - | - |
| Additive C | 7,810 | 145,000 | 18.5 | C₄H₈ | C₂H₄ | 75% | C₄H₈ | 25% | - |
| Additive D | 5,900 | 62,000 | *10.5* | C₄H₈ | C₂H₄ | 75% | C₄H₈ | 25% | - |
| Additive E | 12,000 | 71,000 | 5.9 | - | - | - | - | - | C₅H₁₀ |
| Additive F | 1,400 | 2,800 | 2.0 | C₂H₄ | C₄H₈ | 100% | - | - | - |

In the present embodiment, the additive A, B, C, D, or E shown in Table 1 is used as the polyester to be added to the cellulose acylate film 10. The additive A which is PBS is FZ71 manufactured by Mitsubishi Chemical Corporation, the additive B which is PBS is FZ91 manufactured by Mitsubishi Chemical Corporation, and the additive C which is PBSA is FZ92 manufactured by Mitsubishi Chemical Corporation. The additives D and E which are each PBSA are synthesized by polycondensation of an ester. The values of the number-average molecular weight (Mn), the weight-average molecular weight (Mw), and the dispersity (Mw/Mn) of the additives A to E, each of the components of R1 and R2, and the proportion of the two components in a case where R2 consists of two components (that is, in a case where the polyester is a copolymer (in the present embodiment, a copolymer of a succinate and a butyrate)) are as shown in Table 1.

The molecular weights (Mw and Mn) were determined by gel permeation chromatography (GPC). In addition, the additive F is polyethylene adipate (PEA), is a comparative example used for comparison with the additives A to E, and has a weight-average molecular weight (Mw) of less than 50,000. Also for the additive F, the values of the number-average molecular weight (Mn), the weight-average molecular weight (Mw), and the dispersity (Mw/Mn), and each component of R1 and R2 are as shown in Table 1. Furthermore, in Table 1, items that were not added are marked with "-".

### <(Other) Additives>

The cellulose acylate film 10 may include, in addition to the above-described polyester, a plasticizer, an ultraviolet absorber, and fine particles as a so-called matting agent for preventing the cellulose acylate films 10 from sticking to each other. Examples of the plasticizer include a sugar ester derivative. Use of the sugar ester derivative in combination with the above-described polyester makes it possible not only to adjust the moisture permeability, the water absorbency, the retardation, and the like of the film while imparting the biodegradability, but also to obtain an effect of improving the hardness and the elastic modulus, together with physical properties such as a tear strength, an effect of reducing the residual solvent, and an effect of reducing the elution amount.

The elution amount is an amount of the components of the cellulose acylate film 10 eluted into water or the like, and can be measured in a food contact material test or the like. Specifically, the food contact material test can employ the measurement of a migration amount in food contact materials in EU during long-term storage at room temperature or below room temperature (OM2 conditions). In accordance with the measurement of the migration amount, the cellulose acylate film 10 is cut into a size of 50 cm², and the entire surface of the film is immersed in 100 mL of a liquid including 90% of water and 10% of ethanol in a volume ratio at 40°C for 10 days and allowed to stand. Thereafter, the film sample is taken out, the residual liquid is dried at 105°C, and the weight of the remaining components is measured as the elution amount. The elution amount thus measured is preferably 10 mg or less, and more preferably 5 mg or less.

The sugar ester derivative is a sugar derivative in which a hydroxyl group other than an anomeric carbon of a sugar forms an ester with an acid, and both an ester derivative of a monosaccharide and an ester derivative of a polysaccharide can be used. The sugar ester derivative may be used in the form of a mixture of two or more kinds of compounds. It is preferable that two kinds of compounds different from each other are used as the sugar ester derivative. For example, an ester derivative of sucrose can be used, and two kinds of compounds of sucrose benzoate and sucrose acetate isobutyrate can be used in admixture.

The content of the sugar ester derivative is preferably in a range of 1 part by mass or more and 15 parts by mass or less with respect to 100 parts by mass of the cellulose acylate. The content of the polyester is more preferably in a range of 2 parts by mass or more and 10 parts by mass or less. In a case where the content of the sugar ester derivative is 1 part by mass or more, an effect of improving the hardness, the elastic modulus, or the durability of the cellulose acylate film can be exhibited, and a synergistic effect with the polyester, such as reducing the amount of residual solvents which is a solvent remaining in the film or reducing the elution amount of components of the cellulose acylate film eluted into moisture or the like, can be exhibited. In a case where the content of the sugar ester derivative is 15 parts by mass or less, an effect of improving the hardness and the elastic modulus as well as physical properties such as a tear strength can be preferably exhibited by a synergistic effect with the polyester.

By adding a sugar ester derivative in addition to a specific polyester having a high molecular weight, such as PBS and PBSA, to the cellulose acylate, it is possible to achieve both imparting of high hardness and high durability of the cellulose acylate, or drying properties during solution film formation, and a low elution amount while maintaining the moisture permeability and the water absorbency of the cellulose acylate.

The addition of a specific polyester in addition to the sugar ester derivative increases the viscosity of the dope, particularly at a low temperature. Therefore, this is readily applicable to film formation using a drum that gels the dope and removes it at a high volatile matter content (the amount of residual solvents) during the film formation, which makes it possible to increase an effect of reducing the amount of residual solvents by drying both surfaces from the high volatile matter content. In particular, in a case of forming a film having a thickness of 200 µm or more, the peelability and the reduction of the amount of residual solvents during the film formation are easily achieved, and thus, a thick film can be efficiently formed.

The sugar ester derivative may be either an ester derivative of a monosaccharide or an ester derivative of a polysaccharide, and the cellulose acylate film 10 may include both of these, or two or more kinds of ester derivatives of monosaccharides or two or more kinds of ester derivatives of polysaccharides.

The sugar can be monosaccharides such as glucose, galactose, mannose, fructose, xylose, or arabinose, and polysaccharides such as lactose, sucrose, nystose, 1F-fructosyl nystose, stachyose, maltitol, lactitol, lactulose, cellobiose, maltose, cellotriose, maltotriose, raffinose, kestose, gentiobiose, gentiotriose, gentiotetraose, xylotriose, and galactosyl sucrose. The sugar is preferably glucose, fructose, sucrose, kestose, nystose, 1F-fructosyl nystose, stachyose, or the like, and more preferably the sucrose or the glucose.

In addition, oligosaccharides can also be used as the polysaccharides, and such oligosaccharides are produced by allowing an enzyme such as amylase to act on starch, sucrose, or the like. Examples of the oligosaccharides include a maltooligosaccharide, an isomaltooligosaccharide, a fructooligosaccharide, a galactooligosaccharide, and a xylooligosaccharide.

The monocarboxylic acid which is used for esterifying all or a part of the hydroxyl groups in the monosaccharide or polysaccharide structure is not particularly limited, and a known aliphatic monocarboxylic acid, alicyclic monocarboxylic acid, aromatic monocarboxylic acid, or the like can be used. The carboxylic acid used may be alone or in combination of two or more kinds thereof.

Preferred examples of the aliphatic monocarboxylic acid include saturated fatty acids such as acetic acid, propionic acid, butyric acid, isobutyric acid, valeric acid, caproic acid, enanthic acid, caprylic acid, pelargonic acid, capric acid, 2-ethylhexanoic acid, undecylic acid, lauric acid, tridecylic acid, myristic acid, pentadecylic acid, palmitic acid, heptadecylic acid, stearic acid, nonadecanoic acid, arachidic acid, behenic acid, lignoceric acid, cerotic acid, heptacosanoic acid, montanic acid, melissic acid, and laxelic acid; unsaturated fatty acids such as undecylenic acid, oleic acid, sorbic acid, linoleic acid, linolenic acid, arachidonic acid, and octenoic acid; and alicyclic monocarboxylic acids such as cyclopentanecarboxylic acid, cyclohexanecarboxylic acid, and cyclooctanecarboxylic acid.

Preferred examples of the aromatic monocarboxylic acids include aromatic monocarboxylic acids in which an alkyl group or an alkoxy group is introduced into the benzene ring of benzoic acid, such as benzoic acid and toluic acid; aromatic monocarboxylic acids having two or more benzene rings, such as cinnamic acid, benzyl acid, biphenylcarboxylic acid, naphthalene carboxylic acid, and tetralin carboxylic acid; and derivatives thereof. Among these, the benzoic acid and the naphthoic acid are particularly preferable.

Therefore, an ester derivative of sucrose, more specifically, sucrose benzoate (SB), sucrose acetate isobutylate (SAIB), or the like can be preferably used as the sugar ester derivative. Specifically, the ester derivatives of sucrose that can be used are those represented by Formula (3). Furthermore, in Formula (3), in a case of the sucrose benzoate, R is benzoyl or H and the average degree of substitution is 5.7. In addition, in Formula (3), in a case of the sucrose acetate isobutyrate, R is acetyl and isobutyryl, and the ratio of the both, acetyl/isobutyryl, is 2/6.

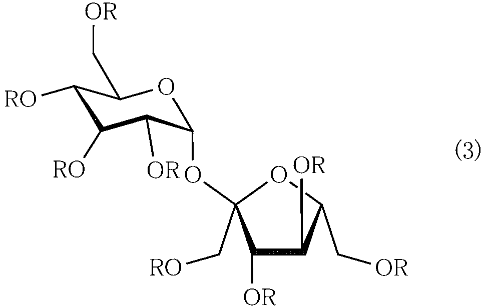

In the case of the sucrose benzoate, as a commercially available product of the ester derivative of sucrose, "MONOPET (registered trademark) SB" (manufactured by DKS Co., Ltd.) can be used.

Furthermore, the safety of each sugar ester derivative is described in the following documents. That is, reference can be made to Journal of Synthetic Organic Chemistry, Vol. 21 (1963) No. 1, P-19-27, the catalog of DKS Co., Ltd., or JP2011-237764A. In the catalog of Dai-ichi Kogyo Seiyaku Co., Ltd., fatty acid esters and benzoic acid esters of sugars are described. Furthermore, the safety includes not only the safety of the substance itself described above, but also the safety of a decomposition product of the substance.

As described above, in the present embodiment, two kinds of compounds, sucrose benzoate and sucrose acetate isobutyrate, are used, which are the sugar ester derivatives represented by Formula (3).

In addition, the cellulose acylate film 10 may contain cellulose acylate, and other additives in addition to the additives consisting of a sugar ester derivative and a polyester. In the present embodiment, an ultraviolet absorber is added, and specifically, a compound represented by Formula (4) is used.

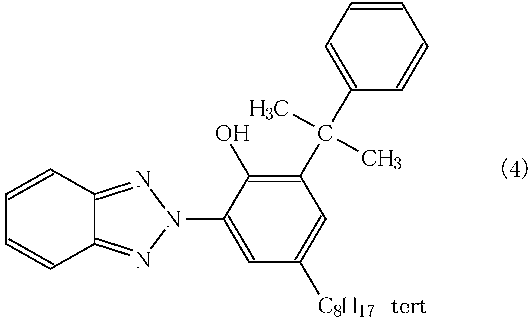

The additives included in the cellulose acylate film 10, including the compound represented by Formula (4), are the additives mixed in the dope.

### <Examples and Comparative Examples>

Hereinafter, Examples of the present invention and Comparative Examples against the present invention will be described with reference to Tables 2, 3, and 4.

**[Table 2]**

| Cellulose acylate Type | Acylation degree | Molecular weight Mn | Molecular weight Mw | Dispersity Mn/Mw |
|---|---|---|---|---|
| CA-1 | 2.86 | 90,000 | 272,000 | 3.0 |
| CA-2 | 2.70 | 140,000 | 300,000 | 2.1 |
| CA-3 | 2.95 | 100,000 | 315,000 | 3.2 |
| CA-4 | 2.40 | - | - | - |
| CAP | 2.67 | 75,000 | 185,000 | 2.5 |

**[Table 3]**

| | Cellulose acylate film | | | | | | | | | |
|---|---|---|---|---|---|---|---|---|---|---|
| | Cellulose acylate | | | Additive 1 | | | | Additive 2 | Thickness | |
| | Type | Acylation degree | Parts by mass | Type | Parts by mass | Type | Parts by mass | | Entire film µm | Surface layer (one surface) µm |
| Example 1 | CA-1 | 2.86 | 100 | Additive A | 20 | - | - | Chem. 1 | 40 | 0.4 |
| Example 2 | CA-1 | 2.86 | 100 | Additive B | 20 | - | - | Chem. 1 | 40 | 0.5 |
| Example 3 | CA-1 | 2.86 | 100 | Additive B | 25 | - | - | Chem. 1 | 40 | 0.5 |
| Example 4 | CA-1 | 2.86 | 100 | Additive C | 25 | - | - | Chem. 1 | 40 | 0.2 |
| Example 5 | CA-1 | 2.86 | 100 | Additive C | 25 | - | - | Chem. 1 | 40 | 0.4 |
| Example 6 | CA-1 | 2.86 | 100 | Additive C | 25 | - | - | Chem. 1 | 40 | 0.5 |
| Example 7 | CA-1 | 2.86 | 100 | Additive C | 25 | - | - | - | 40 | 0.5 |
| Example 8 | CA-1 | 2.86 | 100 | Additive C | 20 | Additive E | 5 | - | 40 | 0.7 |
| Example 9 | CA-1 | 2.86 | 100 | Additive C | 20 | - | - | Chem. 2 | 40 | 0.7 |
| Example 10 | CA-1 | 2.86 | 100 | Additive C | 50 | - | - | - | 40 | 1.0 |
| Example 11 | CA-1 | 2.86 | 100 | Additive D | 50 | - | - | - | 40 | 1.0 |
| Example 12 | CA-1 | 2.86 | 100 | Additive C | 75 | - | - | - | 40 | 1.0 |
| Example 13 | CA-1 | 2.86 | 100 | Additive C | 50 | - | - | - | 80 | 1.2 |
| Example 14 | CA-1 | 2.86 | 100 | Additive C | 75 | - | - | - | 80 | 0.5 |
| Example 15 | CA-1 | 2.86 | 100 | Additive C | 75 | - | - | - | 80 | 2.0 |
| Example 16 | CA-1 | 2.86 | 100 | Additive C | 75 | - | - | - | 80 | 3.0 |
| Example 17 | CA-1 | 2.86 | 100 | Additive C | 75 | - | - | - | 80 | 5.0 |
| Example 18 | CA-1 | 2.86 | 100 | Additive C | 75 | - | - | - | 130 | 3.0 |
| Example 19 | CA-1 | 2.86 | 100 | Additive C | 75 | - | - | - | 130 | 8.0 |
| Example 20 | CA-1 | 2.86 | 100 | Additive C | 100 | - | - | - | 130 | 3.0 |
| Example 21 | CA-2 | 2.70 | 100 | Additive C | 75 | - | - | - | 130 | 3.0 |
| Example 22 | CA-3 | 2.95 | 100 | Additive C | 75 | - | - | - | 130 | 3.0 |
| Example 23 | CAP | 2.67 | 100 | Additive C | 40 | - | - | - | 80 | 1.0 |
| Example 24 | CAP | 2.67 | 100 | Additive C | 100 | - | - | - | 80 | 1.0 |
| Comparative Example 1 | CA-1 | 2.86 | 100 | Additive C | 25 | - | - | Chem. 1 | 40 | - |
| Comparative Example 2 | CA-1 | 2.86 | 100 | Additive C | 50 | - | - | - | 40 | - |
| Comparative Example 3 | CA-1 | 2.86 | 100 | Additive C | 75 | - | - | - | 40 | - |
| Comparative Example 4 | CA-1 | 2.86 | 100 | Additive C | 75 | - | - | - | 130 | - |
| Comparative Example 5 | CA-1 | 2.86 | 100 | Additive D | 50 | - | - | - | 40 | - |
| Comparative Example 6 | CAP | 2.67 | 100 | Additive C | 100 | - | - | - | 80 | |
| Comparative Example 7 | CA-1 | 2.86 | 100 | Additive F | 75 | - | - | - | 40 | - |
| Comparative Example 8 | CA-4 | 2.40 | 100 | Additive C | 75 | - | - | - | 130 | - |

**[Table 4]**

| | Thick film | High-temperature and high-humidity environment | | Water film | Elastic modulus | Folding endurance | Equilibrium moisture content 25°C 50%RH | Moisture permeability 40°C 90%RH |
|---|---|---|---|---|---|---|---|---|
| | Haze degree % | Turbidity | Haze degree % | | | | | |
| | | | | | | times | % | g/m²·day |
| Example 1 | 1.0 | A | 1.7 | A | 3.20 | 2,200 | 1.28 | 750 |
| Example 2 | 1.2 | A | 1.9 | A | 3.10 | 1,950 | 1.29 | 680 |
| Example 3 | 2.0 | A | 3.0 | A | 3.10 | 2,530 | 1.27 | 640 |
| Example 4 | 0.5 | B | 4.2 | A | 3.00 | 3,250 | 1.32 | 770 |
| Example 5 | 0.6 | A | 3.3 | A | 2.90 | 3,120 | 1.34 | 720 |
| Example 6 | 0.8 | A | 2.0 | A | 3.10 | 3,020 | 1.38 | 740 |
| Example 7 | 0.7 | A | 1.8 | A | 3.00 | 3,520 | 1.40 | 870 |
| Example 8 | 2.0 | A | 2.5 | A | 2.70 | 5,720 | 1.20 | 840 |
| Example 9 | 0.6 | A | 1.2 | A | 3.15 | 3,040 | 1.42 | 960 |
| Example 10 | 0.5 | A | 1.8 | A | 1.75 | 24,700 | 1.10 | 983 |
| Example 11 | 0.7 | A | 1.9 | A | 2.00 | 9,500 | 1.15 | 1200 |
| Example 12 | 0.8 | A | 2.5 | A | 0.97 | 89,040 | 0.90 | 1159 |
| Example 13 | 0.5 | A | 1.8 | A | 3.00 | 6,100 | 1.10 | 570 |
| Example 14 | 0.7 | A | 3.2 | A | 1.20 | 58,000 | 0.82 | 620 |
| Example 15 | 0.9 | A | 1.5 | A | 1.35 | 54,500 | 0.84 | 650 |
| Example 16 | 1.2 | A | 1.8 | A | 1.43 | 50,200 | 0.87 | 670 |
| Example 17 | 1.4 | A | 1.6 | A | 1.45 | 47,000 | 0.90 | 685 |
| Example 18 | 0.9 | A | 1.3 | A | 1.29 | 12,500 | 0.88 | 370 |
| Example 19 | 1.3 | A | 1.9 | A | 132 | 10,200 | 0.90 | 390 |
| Example 20 | 1.5 | A | 3.2 | A | 1.00 | 20,300 | 0.65 | 420 |
| Example 21 | 0.9 | A | 3.5 | A | 1.45 | 9,500 | 0.90 | 490 |
| Example 22 | 0.7 | A | 1.2 | A | 1.20 | 14,200 | 0.80 | 330 |
| Example 23 | 2.8 | A | 3.5 | B | 0.60 | 51,000 | 0.45 | 870 |
| Example 24 | 3.5 | A | 4.0 | B | 0.02 | 91,500 | 0.24 | 520 |
| Comparative Example 1 | 0.5 | C | 25.0 | C | 3.10 | 3,750 | 1.25 | 720 |
| Comparative Example 2 | 0.5 | C | 75.0 | C | 1.70 | 24,700 | 1.04 | 952 |
| Comparative Example 3 | 0.7 | C | 92.0 | C | 1.50 | 90,300 | 0.85 | 1110 |
| Comparative Example 4 | 0.4 | C | 85.0 | C | 1.70 | 15,800 | 0.82 | 440 |
| Comparative Example 5 | 0.6 | C | 45.0 | C | 1.85 | 3,700 | 1.10 | 1100 |
| Comparative Example 6 | 3.0 | C | 15.0 | C | 0.02 | 89,000 | 0.20 | 550 |
| Comparative Example 7 | 12.9 | - | - | - | - | 2,520 | - | - |
| Comparative Example 8 | 35.0 | - | - | - | - | - | - | - |

In Examples and Comparative Examples, CA-1 to CA-4 and CAP shown in Table 2 were used as the cellulose acylate. The acylation degree, the number-average molecular weight Mn, the weight-average molecular weight Mw, and the dispersity Mn/Mw of each of CA-1 to CA-4 and CAP are as shown in Table 2. As CAP, commercially available CAP 482-20 (manufactured by Eastman Chemical Company, acylation degree of 2.67 (acetylation degree of 0.18, propionylation degree of 2.49)) is used.

In Examples and Comparative Examples, a substrate film was formed by the film forming step 30 shown in FIG. 1. 2 parts by mass of the UV absorber represented by Formula (4) was added in Examples 1 to 6 and Comparative Example 1. In Example 8, 10 parts by mass of the sugar ester compound represented by Formula (3) was added. Then, the film (cellulose acylate film) on which the surface layer 14 was formed by the saponification step 40 shown in FIG. 1 was used as a film of Examples.

In Examples 1 to 12, saponification was each carried out on both surfaces of the film by the following application method. Specifically, the substrate wound in a roll shape was unwound and transported, and the saponification liquid was applied to one film surface of the substrate by a coating device provided in the transport path. The formulation of the saponification liquid is as follows. Furthermore, in the following composition, % represents a percentage by mass.

| | |
|---|---|
| Potassium hydroxide (KOH) | 3.3% |
| Isopropyl alcohol | 88% |
| Water | 3.66% |
| Propylene glycol | 5% |
| Surfactant | 0.04% |

The cellulose acylate film onto which the saponification liquid had been applied was guided to a heating chamber provided on a transport path, heated while being transported, and then sent to a water tank accommodating water and washed with water to form a surface layer.

In Examples 13 to 22, both surfaces of a substrate were saponified by the following immersion method (a method in which a substrate is immersed in a saponification liquid to perform saponification) to form a surface layer. Specifically, both surfaces of a substrate were immersed in a saponification liquid in which water and propylene glycol monomethyl ether were mixed at 8:2 into an NaOH solution at a concentration of 1.5 mol/L, while adjusting the liquid temperature and the immersion time. Thereafter, the surface layer was formed by performing immersion cleaning in pure water at a temperature of 25°C for 15 seconds as a first cleaning step, performing immersion in an aqueous solution (H2SO4aq) of sulfuric acid at a temperature of 25°C and a concentration of 0.3 mol/L for 15 seconds for neutralization as a neutralization step, performing immersion cleaning in pure water at a temperature of 25°C for 15 seconds as a second cleaning step, draining the surface of the substrate with an air knife, and then performing drying in an environment at a temperature of 100°C for 60 seconds as a drying step.

In Examples 23 and 24, both surfaces of the substrate were saponified by the following immersion method (a method in which a substrate is immersed in a saponification liquid to perform saponification) to form a surface layer. Specifically, both surfaces of a substrate were immersed in a saponification liquid in which water and ethyl alcohol were mixed at 75:25 into a NaOH solution at a concentration of 1.5 mol/L, while adjusting the liquid temperature and the immersion time. Thereafter, the surface layer was formed by performing immersion cleaning in pure water at a temperature of 25°C for 15 seconds as a first cleaning step, performing immersion in an aqueous solution (H2SO4aq) of sulfuric acid at a temperature of 25°C and a concentration of 0.3 mol/L for 15 seconds for neutralization as a neutralization step, performing immersion cleaning in pure water at a temperature of 25°C for 15 seconds as a second cleaning step, draining the surface of the substrate with an air knife, and then performing drying in an environment at a temperature of 100°C for 60 seconds as a drying step.

On the other hand, a film in which the surface layer 14 had not been formed was used as a film of Comparative Examples. In Examples and Comparative Examples, the type and amount (parts by mass) of cellulose acylate, the type and the amount (parts by mass) of the additive, the thickness of the film, and the thickness of the surface layer (the surface on one side) are as shown in Table 3.

For each of the films of Examples and Comparative Examples, the haze degree (%) of the dry film, the haze degree (%) in a high-temperature and high-humidity environment, the elastic modulus, the folding endurance (number of times), the equilibrium moisture content (%), and the moisture permeability (g/m²·day) were examined. In addition, the evaluation of the turbidity in a high-temperature and high-humidity environment and the evaluation of the water film (the water film forming properties) were performed. The haze degree of the dry film, the haze degree in a high-temperature and high-humidity environment, the elastic modulus, the folding endurance, the equilibrium moisture content, the moisture permeability, the evaluation of the turbidity in a high-temperature and high-humidity environment, and the evaluation of the water film (the water film forming properties) are as shown in Table 4.

In Table 4, the haze degree was measured using a haze meter (NDH5000, manufactured by Nippon Denshoku Industries Co., Ltd.). The haze degree of the dry film was measured after being left for 2 hours or longer in an environment of 25°C and a relative humidity of 50% after the film had been created. In addition, the haze degree in a high-temperature and high-humidity environment was measured after 24 hours or longer in an environment of 60°C and a relative humidity of 90% as a storage test in a high-temperature and high-humidity environment.

The evaluation of the turbidity was performed by visually observing the film after the storage test in the high-temperature and high-humidity environment (after 24 hours or longer in the environment of 60°C and a relative humidity of 90%). A case where the surface was transparent was evaluated as "A", a case where the surface was partially turbid was evaluated as "B", and a case where the surface was turbid over the entire surface was evaluated as "C".

In the evaluation of the water film, a 5 cm × 30 cm film was placed on a water bath at 40°C such that an angle formed between the film and the water surface was 45 degrees, and left for 10 minutes. In this manner, in a case where the water film is formed on the film, the water film is visually recognized as transparent, and in a case where a water film is not formed, the water film is visually recognized as cloudy. Using this, the evaluation was performed based on the area proportion of the water film forming portion and the visibility. Specifically, a case where the water film forming portion was in a range of 80% to 100% and the entire film was visually recognized transparent was evaluated as "A", a case where the water film forming portion was in a range of 30% to 80% and a large portion was visually recognized transparent was evaluated as "B", and a case where the water film forming portion was 30% or less and the entire film was visually recognized opaque was evaluated as "C".

The tensile modulus was measured in accordance with Japanese Industrial Standards JIS K7161: 2014. Specifically, eight test pieces were prepared by cutting out test pieces having a length of 150 mm and a width of 15 mm in a measurement direction at an interval of 45° in a direction from the film, the test pieces were stretched in an environment of 25°C and a relative humidity of 60% at a length between chucks of 100 mm and a tensile rate of 200 mm/min, the strains at elongations of 0.1% and 0.5% were each measured, the elastic moduli were calculated from the slopes of two points of the strain, and a value obtained by averaging the calculated values was defined as the final elastic modulus, which was listed in Table 4. Furthermore, the measuring machine used was a tensile tester (manufactured by A&D Co., Ltd.).

The folding endurance indicates durability against the folding, and is determined by an MIT test method. Specifically, a No. 530 MIT type folding endurance tester manufactured by Toyo Seiki Co., Ltd. was used to test a test piece of a cellulose acylate film having a width of 15 mm and a length of 110 mm at a load of 9.8 N and an angle of 135 degrees on the left and right sides on a bending surface having a curvature radius of R0.38, and the number of times until the test piece broke was determined.

The equilibrium moisture content is a moisture content in a state where the moisture content in the material has reached equilibrium in the atmosphere of air at a constant temperature and humidity, and is determined by subjecting a sample of the cellulose acylate film to humidity adjustment in an environment of 25°C and a relative humidity of 50% for 24 hours, and then dividing the mass of moisture in the sample by the mass of the sample, measured using a Karl Fischer moisture meter (AQ-2200, manufactured by Hiranuma Sangyo Co., Ltd.).

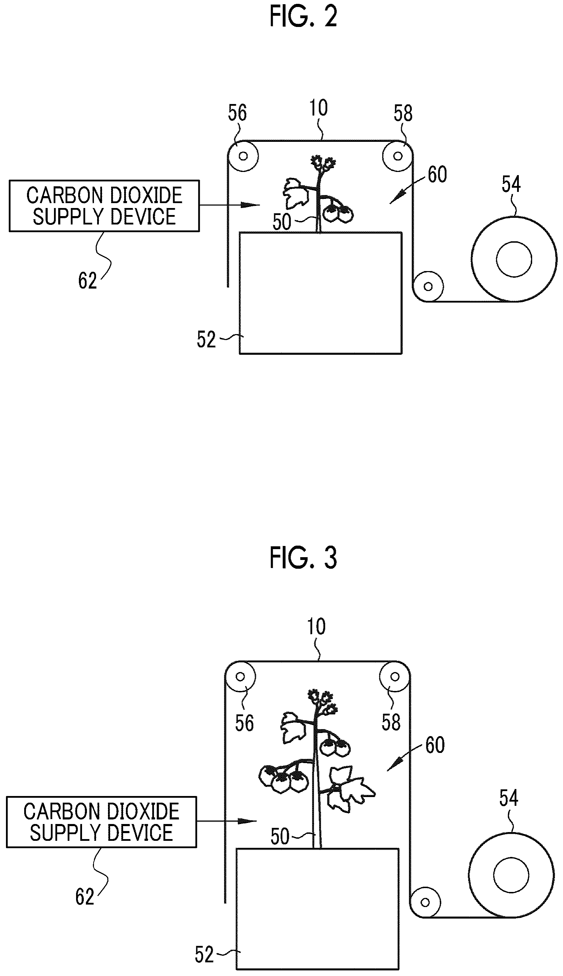

The moisture permeability indicates the amount of water vapor passing through a film-like substance having a unit area in a certain period of time, and is determined in an environment of 40°C and a relative humidity of 90% in accordance with Japanese Industrial Standard JIS Z-0208. Furthermore, in FIGS. 2 to 4, items that are not added, not measured (not measurable), or not evaluated (not evaluable) are marked with "-".

From Table 4, it could be confirmed that the films of Examples, that is, the cellulose acylate film 10 of the embodiment of the present invention has excellent water film forming properties, is highly effective in preventing the turbidity (condensation and cloudiness) especially under high humidity conditions, and can maintain high transparency. As described above, the cellulose acylate film 10 of the embodiment of the present invention can be suitably used as an agricultural material since it can prevent condensation and cloudiness and can maintain high transparency.

As shown in FIGS. 2 and 3, in a case where the cellulose acylate film 10 of the embodiment of the present invention is used as an agricultural material, the film can be used as a cover that covers an agricultural product 50 and a culture medium 52. In FIGS. 2 and 3, the cellulose acylate film 10 is drawn out from a film roll 54 wound in a roll shape and is bridged over the support rollers 56 and 58 to cover the agricultural product 50 and the culture medium 52, thereby forming a growth space 60 for the agricultural product 50. Carbon dioxide necessary for the growth of the agricultural product 50 is supplied from a carbon dioxide supply device 62 to the growth space 60. The support rollers 56 and 58 move up and down between the state shown in FIG. 2 and the state shown in FIG. 3 in accordance with the growth of the agricultural product 50. As a result, carbon dioxide can be efficiently supplied to the growth space 60 while suppressing the supply amount of carbon dioxide.

As described above, by providing the surface layer 14 (see FIG. 1), the cellulose acylate film 10 can prevent condensation and cloudiness, and can thus maintain high transparency. In addition, due to the moisture included in the agricultural product 50 and the culture medium 52, the humidity in the growth space 60 is likely to be higher than the humidity outside the growth space 60, and the condensation or cloudiness is likely to occur on the surface of the cellulose acylate film 10 on the growth space 60 side. Therefore, in a case where the surface layer 14 is provided only on one surface of the cellulose acylate film 10, the surface layer 14 is used facing the growth space 60 side. This makes it possible to more reliably prevent condensation or cloudiness, and to realize a suitable growth environment for the agricultural product 50.

In addition, as described above, the cellulose acylate film 10 can reduce the permeability of carbon dioxide by suppressing the equilibrium moisture content to be low. Therefore, by covering the growth space 60 with the cellulose acylate film 10 in which the equilibrium moisture content is suppressed to be low, specifically, 1.5% or less, it is possible to suppress the outflow of carbon dioxide.

In addition, with the use of the cellulose acylate film 10 of the embodiment of the present invention as an agricultural material, the film has good folding endurance and high durability during repeated feeding and winding in a case where it is unwound or rewound from a roll-shaped film roll, and is stretched between support rollers or transported, which is thus preferable. Explanation of References
10: cellulose acylate film
12: base layer
14: surface layer
20: substrate film (substrate)
30: film forming step
40: saponification step
50: agricultural product
52: culture medium
54: film roll
56, 58: support roller
60: growth space
62: carbon dioxide supply device

## Claims

1. A cellulose acylate film comprising:
a base layer including cellulose acylate and a polyester; and
a surface layer provided on the base layer,
wherein the surface layer is a saponified layer formed by saponifying a surface of a film-like substrate including the cellulose acylate and the polyester,
the base layer is an unsaponified layer which is not saponified in the substrate,
the cellulose acylate has an acyl group substitution degree in a range of 2.50 or more and 3.00 or less, and
the polyester has a weight-average molecular weight in a range of 50,000 or more and 1,000,000 or less, and includes at least one of a compound represented by General Formula (1) or a compound represented by General Formula (2), 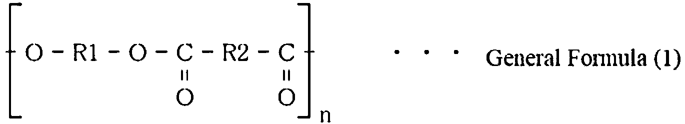 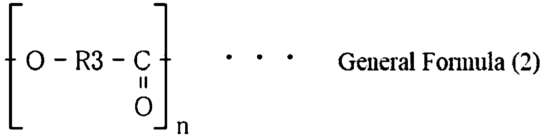
in General Formula (1), R1 and R2 are common or different alkyl groups, and n is an integer of 1 or more, and
in General Formula (2), R3 is an alkyl group and n is an integer of 1 or more.

2. The cellulose acylate film according to claim 1,
wherein in General Formula (1), R1 is a residue derived from a diol having 2 to 6 carbon atoms, and R2 is a residue derived from a dicarboxylic acid having an aliphatic group having 2 to 6 carbon atoms.

3. The cellulose acylate film according to claim 2,
wherein in General Formula (1), R1 and/or R2 each represent two or more kinds.

4. The cellulose acylate film according to claim 1,
wherein in General Formula (2), R3 has 2 to 6 carbon atoms.

5. The cellulose acylate film according to any one of claims 1 to 4,
wherein the surface layer has a thickness in a range of 0.20 µm or more and 10.00 µm or less.

6. The cellulose acylate film according to claim 5,
wherein a ratio of the polyester to the cellulose acylate is in a range of 20 parts by mass or more and 120 parts by mass or less.

7. The cellulose acylate film according to claim 6,
wherein the cellulose acylate is cellulose acetate.

8. The cellulose acylate film according to claim 7,
wherein a haze degree is 5% or less.

9. The cellulose acylate film according to claim 8,
wherein an equilibrium moisture content is 1.5% or less.
